# EUROPÄISCHE PATENTSCHRIFT

(11) **EP 1 908 869 B1**
(45) Veröffentlichungstag und Bekanntmachung des Hinweises auf die Patenterteilung: **25.01.2012**
(21) Anmeldenummer: 07018345.4
(22) Anmeldetag: 19.09.2007
(51) Int. Cl.: D04H 1/54

(54) **Textilstoff mit einem Vlies**
Textile material with a fibrous web
Matière textile dotée d'un voile de fibres

(30) Priorität: 06.10.2006 DE 202006015463 U; 27.10.2006 DE 202006016680 U
(43) Veröffentlichungstag der Anmeldung: 09.04.2008
(73) Patentinhaber: Baur, Friedrich, 91550 Dinkelsbühl (DE)
(72) Erfinder: Baur, Friedrich, 91550 Dinkelsbühl (DE)
(74) Vertreter: FDST Patentanwälte

(56) Entgegenhaltungen:
- DE-A1- 4 424 328
- DE-U1- 20 021 096
- US-A1- 2005 136 155

## Beschreibung

Die Erfindung betrifft einen Textilstoff mit einem Vlies, insbesondere für einen Matratzenbezug oder einen Bekleidungsstoff.

Vliese werden im textilen Bereich in der Regel in Kombination mit anderen Stoffen insbesondere als Füllvliese eingesetzt und an der Rückseite des Stoffes oder zwischen zwei Stofflagen angeordnet. Als Vliese kommen hierbei Wollvliese, Wollmischvliese oder Mischfaservliese zum Einsatz.

Unter Textilstoffe werden hier insbesondere solche Stoffe verstanden, bei denen der Textilstoff im weitesten Sinne eine Schutzfunktion für den menschlichen Körper ausübt. Textilstoffe in diesem Sinne sind daher sowohl Kleidungsstoffe als auch Stoffe für Decken, Bezüge, etc. Insbesondere werden unter Textilstoffe auch Bezüge für Matratzen verwendet.

Unter Wollvliese werden allgemein Vliese verstanden, die zu einem überwiegenden Teil aus Wolle, insbesondere tierischer Schurwolle bestehen. Bei dem Wollvlies handelt es sich daher um ein Naturprodukt. Durch die natürlichen Eigenschaften der Schurwolle, wie beispielsweise ihre hohe Elastizität, ihre damit verbundene sehr gute Wärmeisolierung und aufgrund dessen, dass es sich um ein nicht mit Schadstoffen belastetes Naturprodukt handelt, eignet sich das Wollvlies für die Anwendung im textilen Bereich.

Unter Wollmischvliesen werden Vliese verstanden, bei denen neben Wollfasern weitere Fasern, wie beispielsweise Baumwollfasern oder Kunstfasern wie beispielsweise PES-Fasem (Polyester-Fasern) für das Vlies verwendet werden. Unter Mischfaservliesen werden schließlich solche Vliese verstanden, bei denen keine oder nahezu keine Wollfasern eingesetzt werden und für das Vlies unterschiedliche Faserarten, insbesondere Kunststofffasern, eingesetzt werden.

Ein grundsätzliches Problem bei der Verwendung von Vliesen im textilen Bereich sind die Hygieneanforderungen und damit verbunden die Anforderung einer guten Waschbarkeit. Diese ist bei den Vliesen jedoch nur bedingt gegeben.

So neigen beispielsweise Vliese mit einem Anteil an Kunstfasern aufgrund deren niedrigen Schmelz- oder Erweichungspunktes beim Waschen bei höheren Temperaturen zum Verklumpen.

Auch bei der Verwendung von Wollfasern ist üblicherweise nur eine eingeschränkte Waschbarkeit gegeben. Denn Wollfasern sind aufgrund ihres natürlichen Aufbaus nur schlecht waschbar. Bei Wollprodukten besteht nämlich das Problem, dass beim Waschen durch die Temperaturbehandlung in Kombination mit der mechanischen Belastung und in Verbindung mit dem eingesetzten Wasser eine Verfilzung der Wolle auftritt, die zu einer unerwünschten deutlichen Volumenreduzierung führt. Der Effekt beruht hierbei darauf, dass sich Schuppen der Wollfasern aufgrund eines wasserbedingten Aufquellens der Wolle aufstellen und durch die mechanische Belastung ein Verfilzen auftritt. Wollprodukte sind daher in der Regel nur bei sehr geringen Temperaturen von beispielsweise lediglich 30°C waschbar. Die Waschbarkeit der Wolle kann durch eine spezielle Behandlung der Wolle etwas verbessert werden. Ein bekanntes Behandlungsverfahren stellt hierbei das sogenannte Kroy-Hercosette-Verfahren dar. Bei diesem Verfahren werden in einem zweistufigen Vorgehen zunächst die Schuppen der Wolle zumindest teilweise abgeätzt und anschließend wird die Wollfaser versiegelt. Doch auch mit diesem Verfahren behandelte Wolle zeigt nur eine bedingte Waschbarkeit. Insbesondere bei mehrmaligem und häufigem Waschen zeigen sich deutliche Veränderungen an der Wolle und insbesondere verschlechtert sich das Volumen des Wollvlieses.

Der Erfindung liegt die Aufgabe zugrunde, ein Vlies für den textilen Bereich mit einer guten Waschbarkeit zu ermöglichen.

Die Aufgabe wird gemäß der Erfindung gelöst durch einen Textilstoff mit einem Vlies, insbesondere ein Füllvlies für einen Matratzenbezug oder einen Bekleidungsstoff, das neben Fasern Stützfasem aufweist, die im Ausgangszustand zweikomponentig sind und einen hochschmelzenden Kern und einen niedrigschmelzenden Mantel auf weisen. Die Stützfaser ist hierbei gebildet aus einem nachwachsendem Rohstoff. Als Stützfaser wird hierbei vorzugsweise ein durch eine Fermentierung pflanzlicher Zuckerbausteine hergestelltes Polymer verwendet. Der pflanzliche Ausgangsstoff ist hierbei insbesondere Mais. Aus dem pflanzlichen Ausgangsstoff wird zunächst pflanzlicher Zucker gewonnen, welcher anschließend fermentiert wird. Hierbei wird eine Polymilchsäure ausgebildet, aus der anschließend ein als PLA (Polylactid) bezeichnetes Polymer gewonnen wird, aus dem die Stützfaser hergestellt wird. Derartige Stützfasem sind beispielsweise unter dem Handelsnamen INGEO auf dem Markt erhältlich. Diese Stützfasem sind daher auf rein pflanzlicher Basis und damit aus nachwachsenden Rohstoffen hergestellt.

Vorzugsweise werden als Fasern Naturfasern eingesetzt, so dass das Vlies vollständig aus nachwachsenden Rohstoffen gebildet ist. Das Vlies ist hierbei bevorzugt ein Wollvlies oder ein Wollmischvlies. Als Fasern werden daher insbesondere Wollfasern eingesetzt. Derartige Vliese sind aufgrund der besonderen natürlichen Eigenschaften der Wollfasern besonders geeignet für die Anwendung im textilen Bereich. Aufgrund dieser guten Eigenschaften wird Wolle zudem vom Endverbraucher sehr geschätzt. Bei einem Wollvlies ist das Vlies insbesondere ausschließlich durch die Wollfasern und die Stützfasem gebildet, d. h. es sind keine oder nahezu keine zusätzlichen Fasern oder Stoffe beigefügt.

Alternativ oder ergänzend zu den Wollfasern werden als Naturfasern Baumwollfasern verwendet. Auch die Verwendung von Kunststoff-Fasern (PES-Fasern) in Kombination mit den speziellen Stützfasem ist vorgesehen.

Versuche haben nämlich ergeben, dass insbesondere derartige Bikomponentenfasern mit einem hochschmelzenden Kern und einem niedrigschmelzenden Mantel, basierend auf natürlichen Rohstoffen, die Waschbarkeit des Vlieses, insbesondere Wollvlieses/Wollmischvlieses, entscheidend verbessern. Maßgebend hierfür ist die Stützfunktion der Stützfaser, die bei hohen Waschtemperaturen auch im Bereich von 60°C bis 90°C ihre Stützeigenschaften beibehalten. Im Unterschied hierzu erweichen nämlich bi-komponenten Stützfasern, die aus Polyester hergestellt sind, bereits bei vergleichsweise geringen Temperaturen von etwa 60°C. Bei einem Wollvlies/Wollmischvlies, welches mit bikomponenten Stützfasern auf Polyester-Basis ausgestattet ist, ist keine verbesserte Waschbarkeit gegeben. Vielmehr ist die Waschbarkeit gegenüber einem Wollvlies/Wollmischvlies ohne Stützfasern sogar verschlechtert. Denn beim Waschen erweicht die Polyester-Bikomponentenfasern, so dass diese ihre Stützfunktion verliert und das Wollvlies/Wollmischvlies zumindest in Teilbereichen richtiggehend "verklebt".

Die aufgrund der Auswahl der auf einem nachwachsenden Rohstoff basierend Bikomponentenfaser bedingte verbesserte Temperaturbeständigkeit der Stützfaser führt daher zu der verbesserten Waschbarkeit des Vlieses und insbesondere des Wollvlieses insgesamt.

Bei dem Vlies handelt es sich hierbei bevorzugt um ein thermisch verfestigtes Vlies, welches also nicht oder allenfalls ergänzend mechanisch durch Nadeln verfestigt ist. Durch das thermische Verfestigen wird der niedrigschmelzende Mantel der Stützfaser zumindest teilweise aufgeschmolzen und das aufgeschmolzene Material legt sich nach Art eines Klebers in Kreuzungs- oder Zwickelpunkten um die Wollfasern, so dass insgesamt eine Verfestigung auftritt.

Um eine geeignete thermische Verfestigung zu erreichen, wird eine homogene Mischung aus pflanzlichen oder tierischen Naturfasern, insbesondere Wollfasern, und der Bikomponentenfaser aus nachwachsendem Rohstoff (PLA-Faser) beim Herstellverfahren in einem sogenannten Thermo-Bonding-Verfahren mit Temperaturen behandelt, die im Bereich zwischen der Schmelztemperatur des Mantels und der höheren Schmelztemperatur des Kerns der Bikomponentenfaser liegen.

Insbesondere wird eine Temperaturbehandlung in einem Temperaturbereich zwischen etwa 130°C und 160°C durchgeführt.

Diese Temperaturen entsprechen nämlich in einer bevorzugten Ausgestaltung der Schmelz- oder Erweichungstemperatur des niedrig schmelzenden Mantels (130°C) bzw. des hochschmelzenden Kerns (etwa 160°C) der bikomponenten Stützfaser im Ausgangszustand. Maßgeblich durch diese sehr hohen Schmelztemperaturen ist die gute Waschbarkeit auch bis in den Bereich der für Kochwäsche verwendeten Temperatur bedingt. Die für die Stützfasern eingesetzten PLA-Fasern zeigen üblicherweise ein genau definiertes Schmelzverhalten und gehen in einem engen Temperaturbereich von wenigen °C von dem festen Zustand in den flüssigen Zustand über.

Um die Waschbarkeit zusätzlich zu verbessern ist in einer zweckdienlichen Weiterbildung vorgesehen, dass die Wollfasern vorbehandelt, insbesondere mit einer Art Imprägnierung versehen sind. Insbesondere sind hierbei die Wollfasern nach dem sogenannten Kroy-Hercossette-Verfahren behandelt, das heißt die vorbehandelten Wollfasern werden bei der Herstellung des Wollvlieses mit den Stützfasern vermengt und anschließend - wie bei der Vliesherstellung an sich bekannt - in dem Thermo-Bonding-Verfahren thermisch verfestigt, so dass das Wollvlies als Endprodukt erhalten wird. Bei der Verwendung von Baumwollfasern werden diese ebenfalls vorbehandelt, insbesondere werden diese gewaschen, um deren natürliche "Schutzschicht" aus Fetten und Ölen zu beseitigen.

Die spezielle Kombination der mit dem Kroy-Hercossette-Verfahren vorbehandelten Wollfasern mit den bikomponenten Stützfasern auf PLA-Basis führt zu einer überragenden Waschbarkeit des Wollvlieses, so dass selbst bei mehrfachem und häufigem Waschen das gewaschene Wollvlies kaum von dem Neuprodukt zu unterscheiden ist. Insgesamt lässt sich daher ein derartiges Wollvlies vortrefflich im Textilbereich einsetzen insbesondere auch für solche Textil stoffe, bei denen aus Hygienegründen ein regelmäßiges Waschen auch bei höheren Waschtemperaturen gewünscht ist.

Zweckdienlicherweise liegt der Anteil der Stützfasem bei dem Wollvlies hierbei im Bereich zwischen 15 Vol% und 40 Vol%. Der restliche Anteil wird hierbei durch die vorbehandelten Wollfasern gebildet. Deren Anteil liegt daher insbesondere im Bereich zwischen 85 Vol% und 60 Vol%.

Vorzugsweise ist der Textilstoff ein Matratzenbezug, oder ein Bekleidungsstoff, bei dem das Wollvlies als Füllvlies zwischen einem Oberstoff und einem Unterstoff angeordnet ist.

Neben der exzellente Waschbarkeit weist ein derartiges Wollvlies darüber hinaus noch folgende wesentliche Vorteile auf:
- Durch die Verwendung der Stützfaser auf Basis eines nachwachsenden Rohstoffes und der Verwendung von Schurwolle für die Wollfasern handelt es sich um ein Naturprodukt aus 100% nachwachsenden Rohstoffen.
- Die Zwickel- oder Stützpunkte, die sich beim Thermo-Bonding-Verfahren aufgrund des Aufschmelzen des Mantels an Kreuzungsstellen der Fasern ausbilden, sind aufgrund des verwendeten speziellen Ausgangsmaterials der PLA-Faser eher kristalliner Natur. Im Unterschied hierzu weisen die Stützpunkte bei der Verwendung einer bikomponenten Polyesterfaser eine eher amorphe Struktur auf. Durch die eher kristalline Struktur ist die Stüzfaser auf Basis der PLA-Faser und damit das gesamte Wollvlies insgesamt elastischer und weniger anfällig bei mechanischen Belastungen. Dies führt insgesamt zu einer längeren Lebensdauer.
- Schließlich haben Untersuchungen gezeigt, dass das Wollvlies in der Lage ist, Schadstoffe aufzunehmen. Durch diese Eigenschaft bietet sich der Einsatz des Wollvlieses in Kombination mit Stoffen oder Produkten an, die Schadstoffe emittieren. Insbesondere eignet sich aufgrund dieser Eigenschaft das Wollvlies für den Einsatz bei Matratzen. Als Schlafmatratzen werden nämlich in immer größeren Anteilen Schaumstoffmatratzen eingesetzt. Jüngere Untersuchungen zeigen, dass hier generell ein Problem der Schadstoffemission besteht, dass also auch über längere Zeiträume nach der Produktion der Schaumstoffmatratze Schadstoffe austreten können.

Ein Ausführungsbeispiel der Erfindung wird im Folgenden anhand der Zeichnung näher erläutert. Es zeigen jeweils in schematisch und stark vereinfachten Darstellungen:
- Fig. 1: eine Darstellung der Struktur eines aus mehreren Fasern bestehenden Wollvlieses,
- Fig. 2: eine Querschnittsdarstellung einer bikomponenten Faser auf Basis eines nachwachsenden Rohstoffes sowie
- Fig. 3: eine ausschnittsweise Querschnittsdarstellung eines Matratzenbezugs mit einem Wollvlies.

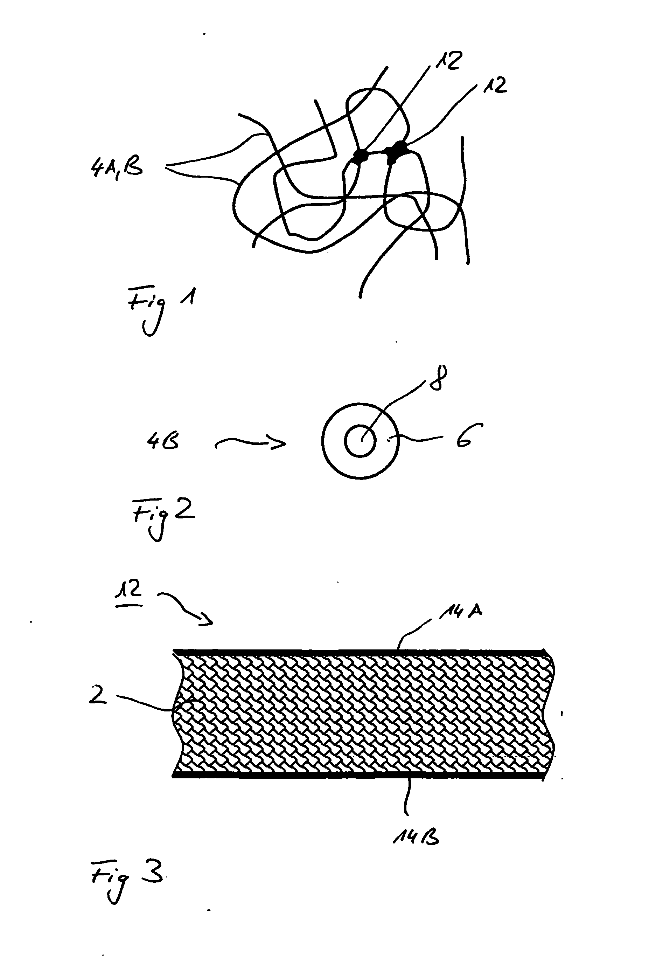

Wie aus Fig. 1 zu entnehmen ist, sind bei einem Wollvlies 2 Fasern 4A,B in ungeordneter Weise zueinander orientiert und bilden das Vlies. Zur Herstellung des Wollvlieses 2 werden Wollfasern 4A und Stützfasern 4B miteinander vermischt. In Fig. 1 sind die beiden Faserarten lediglich stark vereinfacht und ununterscheidbar dargestellt.

Als Stützfaser 4B wird eine zwei- oder bikomponenten Faser herangezogen, die schematisch in Fig. 2 in einer Querschnittsdarstellung gezeigt ist. Die Stützfaser 4B weist einen niedrigschmelzenden Mantel 6 sowie einen hochschmelzenden Kern 8 auf. Die Schmelztemperatur des Mantels 6 liegt hierbei etwa bei 130°C wohingegen die Schmelztemperatur des Kerns 8 bei etwa 160°C liegt.

Der Mantel 6 verflüssigt sich daher bereits bei Temperaturen, bei denen der Kern 8 noch formstabil bleibt. Die Stützfaser 4B wird hierbei aus einem pflanzlichen Ausgangsstoff, insbesondere Mais, gewonnen. Aus dem pflanzlichen Ausgangsstoff wird zunächst pflanzlicher Zucker gewonnen, welcher anschließend fermentiert wird. Aus den dabei erhaltenen Produkten wird ein als Polylactid (Polymilchsäure) bezeichnetes Polymer (PLA) gewonnen, aus dem dann die Stützfaser 4B hergestellt wird. Eine derartig hergestellte Stützfaser 4B ist unter dem Markennamen INGEO erhältlich.

Für die Herstellung des Wollvlieses 2 werden nach dem Kroy-Hercosette-Verfahren oder nach einem zu diesem Verfahren ähnlichen Verfahren vorbehandelte Wollfasern 4A mit den Stützfasern 4B vermischt. Der Anteil der Stützfasern 4B liegt hierbei etwa zwischen 15-40 Vol.%. Der Rest wird durch die Wollfasern 4A gebildet. Als Wollfasern 4A werden Fasern aus Schurwolle, insbesondere Schafschurwolle verwendet. Anschließend werden mit aus der Wollbearbeitung bekannten Verfahrensschritten die Fasern zu einem gemeinsamen Vliesstoff verarbeitet. Je nach gewünschter Dicke werden hierbei mehrere Lagen des Vliesstoffes übereinander gelegt. Im nächsten Schritt erfolgt eine thermische Verfestigung mit Hilfe des sogenannten Thermo-Bonding-Verfahrens. Hierbei wird der Vliesstoff bis auf eine Temperatur etwas oberhalb der Schmelztemperatur des Materials des Mantels 8 erwärmt. Insbesondere erfolgt hierbei eine Erwärmung auf einen Temperaturbereich zwischen 130°C und maximal bis 160°C. Hierdurch verflüssigt sich das Material des Mantels 6 und schmiegt sich an die Fasern 4 an. Dies ist in Fig. 1 beispielhaft an zwei Punkten durch Zwickel 10 dargestellt. Nach der anschließenden Abkühlung verfestigt sich das Mantelmaterial wieder, so dass insgesamt das Wollvlies 2 mit zueinander verfestigten Fasern 4 erhalten wird.

Zur Ausbildung eines in Fig. 3 dargestellten Matratzenbezugs 12 wird das Wollvlies 2 zwischen einem Oberstoff 14A und einem Unterstoff 14B gelegt. Prinzipiell sind auch andere an sich bekannte Aufbauten des Matratzenbezugs unter Verwendung des Wollvlieses 2 möglich. In gleicher Weise kann das Vlies 2 auch für Bekleidungsstücke eingesetzt werden.

### Bezugszeichenliste

- 2: Wollvlies
- 4: Fasern
- 4A: Wollfasern
- 4B: Stützfasern
- 6: Mantel
- 8: Kern
- 10: Zwickel
- 12: Matratzenbezug
- 14A: Oberstoff
- 14B: Unterstoff

## Patentansprüche

1. Textilstoff mit einem Vlies (2), das Fasern, insbesondere Wollfasern (4A) sowie im Ausgangszustand zweikomponentige Stützfasem (4B) aus einem nachwachsenden Rohstoff aufweist, die im Ausgangszustand einen hochschmelzenden Kern (8) und einen niedrigschmelzenden Mantel (6) umfassen.

2. Textilstoff nach Anspruch 1, das als Wollvlies, Wollmischvlies oder als Mischfaservlies ausgebildet ist.

3. Textilstoff nach Anspruch 1 oder 2, bei dem als Fasern Naturfasern, insbesondere Wollfasern (4A) vom Schaf, Kamel und/oder der Cashmereziege oder Baumwollfasern verwendet sind.

4. Textilstoff nach einem der vorhergehenden Ansprüche, bei dem für die Stützfasem (4B) ein durch eine Fermentierung pflanzlicher Zuckerbausteine hergestelltes Polymer verwendet ist.

5. Textilstoff nach einem der vorhergehenden Ansprüche , das thermisch verfestigt ist, wobei der Mantel (6) zumindest teilweise aufgeschmolzen ist und das aufgeschmolzene Material nach Art eines Klebers die Fasern (4A,4B) verfestigt.

6. Textilstoff nach Anspruch 5, dass bei Temperaturen im Bereich zwischen den Schmelz- oder Erweichungspunkten des hochschmelzenden Kerns (8) und des niedrigschmelzenden Mantels (6) thermisch verfestigt ist.

7. Textilstoff nach einem der vorhergehenden Ansprüche, bei dem die Schmelztemperatur des Mantels (6) etwa bei 130°C und die des Kerns (8) bei etwa 160°C liegt.

8. Textilstoff nach einem der Ansprüche 3 bis 7, bei dem die Naturfasern (4A) für eine Waschbarkeit behandelt sind.

9. Textilstoff nach Anspruch 8, bei dem die Wollfasern (4A) nach dem Kroy-Hercosette-Verfahren behandelt sind.

10. Textilstoff nach einem der vorhergehenden Ansprüche, bei dem der Anteil der Stützfasem (48) im Bereich zwischen 15 - 40 Vol% liegt.

11. Textilstoff nach einem der vorhergehenden Ansprüche, insbesondere Matratzenbezug (12), bei dem das Vlies (2) zwischen einem Oberstoff (14A) und einem Unterstoff (14B) angeordnet ist.

## Claims

1. Textile material with a non-woven fabric (2) having fibres, especially wool fibres (4A) as well as in the initial state two-component support fibres (4B) made of a renewable raw material, comprising in the initial state a high-melting core (8) and a low-melting coat(6).

2. Textile material according to claim 1, formed as wool fleece, wool mix fleece or mixed fibres fleece.

3. Textile material according to claim 1 or 2, whereby native fibres, especially wool fibres (4A) from sheep, camels and/or cashmere goats or cotton fibres are used as fibres.

4. Textile material according to one of the preceding claims, whereby a polymer produced by the fermentation of plant sugar components is used for the support fibres (4B).

5. Textile material according to one of the preceding claims thermally consolidated, whereby the coat (6) is at least partially melted and the melted material consolidates the fibres (4A, 4B) like a glue.

6. Textile material according to claim 5 being thermally consolidated in case of temperatures ranging between the melting or softening temperatures of the high-melting core (8) and the low-melting coat (6).

7. Textile material according to one of the preceding claims, whereby the melting temperature of the coat (6) is about 130°C and that of the core (8) is about 160°C.

8. Textile material according to one of the claims 3 to 7, whereby the native fibres (4A) are treated in order to be washable.

9. Textile material according to claim 8, whereby the wool fibres (4A) are treated according to the Kroy-Hercosette-method.

10. Textile material according to one of the preceding claims, whereby the share of the support fibres (4B) ranges from 15 to 40 Vol%.

11. Textile material according to one of the preceding claims, especially mattress covers (12), whereby the non-woven fabric is arranged between an upper material (14A) and a lining (14B).

## Revendications

1. Etoffe textile avec une voile ayant des fibres, notamment des fibres lainières (4A) et à l'état initial des fibres d'appui à deux composants (4B) d'une matière première renouvelable, comprenant à l'état initial un noyau à haut point de fusion (8) et une gaine à bas point de fusion (6).

2. Etoffe textile selon la revendication 1 qui est formée comme voile lainière, voile mélangée de laine ou comme voile de fibres mélangées.

3. Etoffe textile selon la revendication 1 ou 2, dans laquelle des fibres naturelles, particulièrement des fibres lainières (4A) du mouton, du chameau et/ou de la chèvre cashmere ou des fibres de coton, sont utilisées comme fibres.

4. Etoffe textile selon l'une des revendications précédentes dans laquelle un polymère étant produit par la fermentation des composants sucrés végétales est utilisé pour les fibres d'appui (4B).

5. Etoffe textile selon l'une des revendications précédentes thermiquement stabilisée, dans laquelle la gaine est au moins partiellement fondue et le matériau fondu stabilise les fibres (4A, 4B) à la façon d'une colle.

6. Etoffe textile selon la revendication 5 étant thermiquement stabilisée en cas de températures entre les points de fusion ou de ramollissement du noyau à haut point de fusion (8) et de la gaine à bas point de fusion (6).

7. Etoffe textile selon l'une des revendications précédentes, dans laquelle la température de fusion de la gaine (6) est environ 130°C et celle du noyau (8) est environ 160°C.

8. Etoffe textile selon l'une des revendications 3 à 7, dans laquelle les fibres naturelles (4A) sont traitées pour être lavables.

9. Etoffe textile selon la revendication 8, dans laquelle les fibres lainières (4A) sont traitées selon la méthode Kroy-Hercosette.

10. Etoffe textile selon l'une des revendications précédentes, la part des fibres d'appui (4B) allant de 15 à 40 Vol%.

11. Etoffe textile selon l'une des revendications précédentes, spécialement un protège-matelas (12), dans lequel la voile (2) est arrangée entre une étoffe de dessus (14A) et une étoffe de dessous (14B).
